(19) Europäisches Patentamt

European Patent Office

Office européen des brevets

(11) **EP 1 277 865 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(51) Int Cl.:
*D04H 1/06* (2006.01)    *D04H 1/50* (2006.01)
*B32B 3/28* (2006.01)

(21) Anmeldenummer: **02011392.4**

(22) Anmeldetag: **24.05.2002**

(54) **Dreidimensionale regelmässig strukturierte Vliesstoffe, Verfahren zu deren Herstellung und deren Verwendung**

Non-woven with regular three-dimensional pattern, process for producing the same and applications

Non-tissé tridimensionnel à motifs réguliers, son procédé de fabrication ainsi que ses applications

(84) Benannte Vertragsstaaten:
**AT BE CH CY DE DK ES FI FR GB GR IE IT LI LU MC NL PT SE TR**

(30) Priorität: **16.07.2001 DE 10133773**

(43) Veröffentlichungstag der Anmeldung:
**22.01.2003 Patentblatt 2003/04**

(73) Patentinhaber: **Carl Freudenberg KG**
**69469 Weinheim (DE)**

(72) Erfinder:
- **Groitzsch, Dieter, Dr.**
  **69493 Hirschberg (DE)**
- **Staudenmayer, Oliver, Dr.**
  **69469 Weinheim (DE)**

(56) Entgegenhaltungen:
**EP-A- 0 604 731       EP-A- 0 814 189**
**WO-A-00/40793       WO-A-98/52458**
**US-B1- 6 277 469**

- **PATENT ABSTRACTS OF JAPAN vol. 1997, no. 08, 29. August 1997 (1997-08-29) & JP 09 111631 A (DAIWABO CO LTD), 28. April 1997 (1997-04-28)**
- **PATENT ABSTRACTS OF JAPAN vol. 017, no. 142 (C-1038), 23. März 1993 (1993-03-23) & JP 04 312431 A (KAO CORP), 4. November 1992 (1992-11-04)**
- **PATENT ABSTRACTS OF JAPAN vol. 1997, no. 10, 31. Oktober 1997 (1997-10-31) & JP 09 158022 A (DAIWABO CO LTD), 17. Juni 1997 (1997-06-17)**
- **PATENT ABSTRACTS OF JAPAN vol. 2000, no. 17, 5. Juni 2001 (2001-06-05) & JP 02 258249 A (CARL FREUDENBERG:FA), 19. Oktober 1990 (1990-10-19)**

EP 1 277 865 B1

**Beschreibung**

Technisches Gebiet

Die vorliegende Erfindung betrifft Vliesstoffe mit einem regelmäßigen Oberflächenmuster sowie deren Herstellung und Verwendung.

Aus der EP-A-814,189 ist ein Vliesstoff bekannt, der aus mindestens einem unidirektional verstreckten Spunbond und einem damit mechanisch verbundenen Kurzfaservlies besteht. Der Verbund zeichnet sich durch hohes Volumen und gute Griffigkeit aus.

Dreidimensional strukturierte Faserflächengebilde sind an sich bekannt. In der DE-A-199 00 424 werden dreidimensional strukturierte Kombinationen aus miteinander in Form eines regelmäßigen Musters thermisch verschweißten Endlos- und Stapelfaserschichten beschrieben. Die Entwicklung der dreidimensionalen Struktur erfolgt durch Verwendung von Faserschichten mit unterschiedlicher Schrumpffähigkeit. Durch Auslösen des Schrumpfes wird der Stapelfaserschicht eine dreidimensionale Struktur aufgeprägt. Es hat sich dabei allerdings gezeigt, dass die dabei entstehende dreidimensionale Struktur unregelmäßig ist, da die Abfolge von Erhöhungen und Vertiefungen, nach einem eher zufälligen Muster verläuft.

Beispiele für solche Verbunde sind Faserflächengebilde aus mindestens ein oder zwei Vliesstoffen und extrudierten, biaxial gereckten Netzen, wie beispielsweise aus Polypropylen (nachstehend "PP" genannt). Diese entwickeln nach der Laminierung durch Schrumpfung aufgeworfene Strukturen in der dritten Dimension. Diese Aufwerfungen sind unter anderem aufgrund der Schrumpfung in beiden Richtungen, d.h. in Längs- und Querausrichtung der Monofilamente des gereckten PP-Netzes, relativ ungleichmäßig und optisch nicht besonders ansprechend. Der Zusammenhalt der beiden Vliesstofflagen erfolgt üblicherweise durch das Netz hindurch durch punkt- oder musterartige Verschweißung in einem Kalander mit Druck und Temperatur.

JP-A-09/111,631 beschreibt die Kombination von unterschiedlich schrumpffähigen Vliesstoffen. Durch Auslösung des Schrumpfes einer Schicht bilden sich auf der Oberfläche des Verbundes Wellen aus. Stapelfaserflore als Außenlagen werden in dieser Schrift nicht offenbart.

JP-A-04/312,431 beschreibt einen abrasiven Verbund. Dieser enthält auf einer oder beiden Außenseite(n) eine poröse Folie.

Ausgehend von diesem Stand der Technik liegt dieser Erfindung die Aufgabe zugrunde, dreidimensional strukturierte Faserflächengebilde bereitzustellen, die sich durch ein regelmäßiges dreidimensionales Muster auszeichnen und die besonders leichtgewichtige und gleichzeitig hochsaugfähige Verbunde darstellen. Bei der vorliegenden Erfindung geht es also darum, Methoden zu entwickeln, mit denen eine gleichmäßige Struktur erzeugt werden kann, d.h. durch bestimmte erfindungsgemäße Maßnahmen die Struktur der dreidimensionalen Aufwerfungen bzw. Vertiefungen vorzubestimmen und die Zufälligkeiten und die damit verbundene Unregelmäßigkeiten der Struktur zu verhindern.

Die vorliegende Erfindung betrifft ein dreidimensional strukturiertes Faserflächengebilde mit regelmäßig in Bezug auf die Flächenebene alternierend auftretenden Erhebungen und Vertiefungen abgeleitet von mindestens einem, vorzugsweise zwei, als Außenlage angeordnetem Stapelfaserflor und einem damit verbundenen geschrumpften Flächengebilde, wobei die Verbindung zwischen dem Stapelfaserflor und dem geschrumpften Flächengebilde durch Verschweißen erfolgt ist und wobei das Verschweißen senkrecht zur Richtung des stärksten Schrumpfes des geschrumpften Flächengebildes in der Form von regelmäßig angeordneten Linien, vorzugsweise in der Form von regelmäßig angeordneten und ununterbrochenen Linien, erfolgt ist.

Der erfindungsgemäße Verbund weist mindestens ein als Außenlage angeordnetes Stapelfaserflor, vorzugsweise mindestens zwei als Außenlagen angeordnete Stapelfaserflore, und damit verbundenen mindestens eine Lage eines weiteren Flächengebildes auf, das derart ausgestaltet ist, daß es unter Einwirkung von feuchter und/oder trockener Hitze zum Schrumpfen bzw. zur Verkleinerung seiner Fläche neigt.

Die erfindungsgemäß zum Einsatz kommenden nicht oder unter Herstellungsbedingungen nur gering schrumpfenden Stapelfaserflore (ungebundene Stapelfaservliesstoffe) können aus beliebigen Fasertypen der verschiedensten Titerbereiche bestehen, beispielsweise der Titer von 0,5 bis 5 dtex. Neben Homofilfasern können auch Heterofitfasern oder Gemische verschiedenster Fasertypen eingesetzt werden.

In einer bevorzugten Ausführungsform enthält das erfindungsgemäße dreidimensional strukturierte Faserflächengebilde drei Schichten, wobei die beiden das geschrumpfte Flächengebilde dreidimensional abdeckenden Außenschichten Stapelfaserflore sind, und wobei die abdeckenden Stapelfaserflore gleiche oder unterschiedliche Faserorientierungen und/oder gleichen als auch unterschiedlichen Faseraufbau aufweisen können.

Typischerweise weisen die zum Einsatz kommenden ungebundenen Vorstufen von Vliesstoffen (Flore) Flächengewichte von 6 bis 70 g/m$^2$ auf.

In einer bevorzugten Ausführungsform enthält das erfindungsgemäße dreidimensional strukturierte Faserflächengebilde drei Schichten, und weist Flächengewichte von 15 bis 150 g/m$^2$ auf.

Besonders bevorzugt kommen Stapetfaserflore mit geringen Flächengewichten von 6 bis 40 g/m$^2$ zum Einsatz.

Aus diesen Stapelfaserfloren lassen sich besonders leichtgewichtige und gleichzeitig hochsaugfähige Verbunde herstellen.

Das Verschweißen zwischen dem Stapelfiaserflor und dem geschrumpften bzw. schrumpffähigen Flächengebilde des erfindungsgemäßen Verbundes erfolgt vorzugsweise durch Hitze und Druck im Kalanderspalt und/oder durch Ultraschall.

Die Schrumpfung kann dabei nur in einer Vorzugsrichtung erfolgen, aber auch in beiden oder mehr als zwei Richtungen. Die Schrumpfbeträge bei mehreren Richtungen, wie in beiden Richtungen, d.h. in Maschinenlaufrichtung und im neunzig Gradwinkel zur Maschinenlaufrichtung, können gleich oder völlig unterschiedlich sein.

Zur Festlegung des Bindungsmusters zur Fixierung des unter Prozeßbedingungen nicht- oder nur geringschrumpffähigen Stapelfaserflors auf das schrumpffähige Flächengebilde sollte sich deren Verhältnis in Längs- zur Querrichtung annähernd, vorzugsweise im gleichen Verhältnis wiederfinden. Wenn beispielsweise das schrumpffähige Flächengebilde ausschließlich in Längsrichtung schrumpft und also überhaupt keinen Querschrumpf aufweist, so ist das Linienmuster der Verschweißung von Stapelfaserflor und schrumpffähigem Flächengebilde senkrecht zur Längsrichtung zu wählen. So ist beispielsweise als Gravur-Kalanderwalze eine solche zu wählen, die Erhöhungen aufweist, die zu 100 % in Querrichtung ausgerichtet sind, d.h. sie muß zur Verschweißung durchgehende Linien aufweisen.

Es hat sich herausgestellt, daß der Abstand dieser Linien und der lineare Schrumpfbetrag für die Ausgestaltung der Erhöhungen und Vertiefungen verantwortlich ist; d.h. die Form der aus der Ebene herausragenden Teile des Faserflächengebildes wird durch den Verlauf der Linien des Verschweißungsmusters exakt festgelegt.

Das schrumpfende bzw. geschrumpfte Flächengebilde kann von beliebiger Natur sein. Dabei kann es sich um ein schrumpffähiges Faserflächengebilde handeln, beispielsweise um ein Gewebe, Gewirke, Netze, Gelege, parallel verlaufende Monfilamente oder Stapelfaser- oder Multifilamentgarne oder um einen Vliesstoff oder es kann sich um eine schrumpffähige Folie handeln. Das schrumpffähige Faserflächengebilde kann aus verstreckten, linear ausgerichteten und parallel zueinander orientierten Fäden oder Garnen bestehen. Die verstreckten bzw. gereckten Fäden oder Monofilamente können durch andere in einem Winkel zu den ersteren ausgerichteten verstreckten oder nicht verstreckten oder weniger verstreckten Fäden/Monofilamente bzw. Gamen bestehen. Die sich überkreuzenden Fasern, Fäden oder Monofilamente können durch Eigenbindung, beispielsweise durch mechanische Bindung oder durch Verschweißen an den Kreuzungspunkten, an die anderen gebunden sein. Die Bindung kann aber auch durch Bindemittel, wie wäßrige Dispersionen erfolgt sein.

Das erfindungsgemäß aufgebaute und zu einem Laminat verbundene dreidimensional strukturierte Faserflächengebilde kann aus einem geschrumpften Flächengebilde und zumindest einem nicht oder unter Prozeßbedingungen weniger geschrumpften Stapelfaserfloren bestehen. Das geschrumpfte Flächengebilde kann aber auch auf beiden Seiten mit einem Stapelfaserflor abgedeckt sein, entweder symmetrisch oder asymmetrisch, d.h. die Gewichte beiden Lagen aus Stapelfaserfloren können unter-schiedlich oder gleich sein. Beide Lagen aus Stapelfaserfloren können, sofern sie überhaupt zum Schrumpfen neigen, gleiche Schrumpfbeträge aufweisen oder unterschiedliche. Mindestens eine der beiden Lagen aus Stapelfaserfloren muß aber weniger geschrumpft sein als das in der Mitte positionierte geschrumpfte Flächengebilde.

Das schrumpffähige bzw. geschrumpfte Flächengebilde des Laminates kann aus einer uniaxial- oder biaxial gereckten Folie bestehen. Die Folie kann nach den bekannten Herstellverfahren erzeugt worden sein, beispielsweise nach dem Blasverfahren, d.h. in Schlauchform gereckt worden sein. Sie kann aber auch durch Extrusion durch eine Breitschlitzdüse geformt und durch mechanisches Recken in Maschinenlaufrichtung gelängt worden sein oder quer zur Maschinenlaufrichtung durch einen Spannrahmen oder durch Passieren eines ineinandergreifenden Walzenpaares mit Rillierung in Maschinenlaufrichtung gereckt worden sein.

Das übliche Reckverhältnis der Folie liegt bei bis zu 5 : 1 in einer oder beiden Reckrichtungen. Unter Reckverhältnis wird das Längenverhältnis der Folie nach zu vor der Reckung verstanden.

Das Extrudat der Folie kann mit an sich bekannten Füllstoffen oder Strukturbildnem versehen sein, beispielsweise mit anorganischen Partikeln, wie z.B. Kreide, Talk oder Kaolin. Dadurch kann durch die Reckung in an sich bekannter Weise eine mikroporöse Struktur erzeugt werden mit dem Vorteil einer verbesserten Atmungsaktivität.

Die Folie kann aber auch vor der Reckung mit an sich bekannten Methoden perforiert worden sein, so daß sich die Perforationen nach dem Recken zu größeren Perforationen ausweiten.

Die Folie kann aber auch vor dem Recken geschlitzt worden sein, so daß insbesondere durch Reckung im 90° Winkel zu der Längenausdehnung der Schlitze dieselbe zu Perforationen ausgeweitet werden.

Die Folie kann vor der Reckung musterartig geschwächt worden sein, so daß die geschwächten Stellen beim Recken zu Perforationen aufgeweitet werden. Die musterartige Schwächung der Folie kann durch eine Kalanderwalzenpassage, d.h. durch Hitze und Druck bzw. durch Ultraschall-Behandlung erfolgen.

Die Folie kann unabhängig, ob perforiert, musterartig geschwächt oder geschlitzt, aus einer einzigen Schicht bestehen oder durch Coextrusion aus mehreren Schichten, d.h. mindestens zwei aufgebaut sein. Einer der beiden oder die beiden äußeren Schichten der coextrudierten Folie können aus niedriger schmelzenden Thermoplasten als die andere bzw. die Mittelschicht bestehen. Die Fasern der die Schrumpffolie umgebenden Vliesstofflagen können ausschließlich an der bzw. den niedriger schmelzenden Schicht(en) der coextrudierten Folie und nicht an der Mittelschicht angebunden sein.

Das schrumpffähige bzw. geschrumpfte Flächengebilde des Laminates kann aus einem losen Faserflor aus 100 % schrumpfenden, d.h. stark verstreckten Fasern bestehen, der nach bekannten Vlieslegetechniken gebildet worden ist. Die Fasern können isotrop oder in einer Vorzugsrichtung, d.h. anisotrop abgelegt worden sein. Der Faserflor kann vor der Laminierung mit mindest einer nicht schrumpfenden Faservliesstoffschicht mit bekannten Methoden vorverfestigt sein, wobei deren Verfestigungsbedingungen so gesteuert werden, daß das Schrumpfvermögen nicht oder nur unwesentlich beeinflusst wird. Der aus schrumpfenden Fasern bestehende Flor kann aus gleichen oder unterschiedlichen Titern derselben Faser bestehen. Der Titer dieser Fasern liegt üblicherweise im Bereich von ca. 0,5 dtex bis ca. 50 dtex, vorzugsweise jedoch im Bereich zwischen 0,8 und 20 dtex. Die den schrumpffähigen bzw. geschrumpften Vliesstoff oder Flor aufbauenden Fasern können aus unterschiedlichsten Fasern aufgebaut sein, beispielsweise aus Homofilfasern, aber auch aus 100 % Bikomponenten-Fasem oder einem Verschnitt aus BikomponentenFasern und Homofilfasern, mit der Einschränkung, daß das höher schmelzende Polymer der Bikomponenten-Faser identisch mit demjenigen der Homofilfaser ist, wie beispielsweise der Faserverschnitt PP-Homofil- mit PP/PE- Side-by-Side oder Kern-/Mantel-Bikomponentenfaser (PE = Polyethylen). Im letzteren Fall besteht die Mantelkomponente aus PE und dieses fungiert als Bindesubstanz für die Fixierung von ein bzw. zwei nichtschrumpfenden Stapelfasrfforen auf einer bzw. beiden Seiten der Schrumpffaserschicht.

Die schrumpfende bzw. geschrumpfte Flor- oder Vriesstoffschicht kann mit bekannten Methoden perforiert worden sein oder eine netzartige Struktur aufweisen.

Solche Methoden der Perforation oder Strukturbildung werden bevorzugt, die auf dem Prinzip eines musterartiges Zurseiteschiebens der Fasern beruhen. Solche nicht materialzerstörenden Verfahren sind in EP-A-919,212 und EP-A-789,793 beschrieben.

Es können auch die oben bei der Folie beschriebenen Perforationsverfahren angewendet werden.

Als schrumpfende bzw. geschrumpfte Schicht einer Kompositstruktur können auch uni- oder biaxial gereckte, extrudierte Plastiknetze verwendet werden. Der Verstreckungsgrad in beiden Richtungen kann gleich oder unterschiedlich sein.

Vorzugsweise ist jedoch zumindest eine Vorzugsrichtung stark verstreckt. Unter starkem Verstreckungs- oder Reckgrad wird ein Verstreckungsverhältnis von mindestens 3 : 1 verstanden.

Die Stärke der Fäden liegt üblicherweise bei 150 bis 2000 $\mu$m. Unter extrudierten Plastik-Netzen werden Flächengebilde mit Gitterstruktur verstanden, die dadurch gebildet wird, daß sich erste parallel angeordnete Monofilamentscharen mit zweiten ebenfalls parallel angeordneten Monofilamentscharen in einem bestimmten gleichbleibenden Winkel kreuzen und an den Kreuzungspunkten miteinander eigenverschweißt sind. Bei Plastiknetzen bestehen die beiden Monofilamentscharen im Normalfall aus demselben Polymer. Die Dicke und der Verstreckungsgrad der zwei Filamentscharen kann aber unterschiedlich sein.

Als schrumpffähige bzw. geschrumpfte Flächengebilde können auch Gelege eingesetzt werden, die sich von Plastiknetzen oder- Gittern dadurch unterscheiden, daß die sich kreuzenden Filamentscharen an ihren Kreuzungspunkten nicht durch Eigenbindung miteinander vebunden sind sondern durch eine Bindemittelapplikation, wie beispielsweise wäßrige Polymerdispersionen. In diesem Fall können die beiden parallel orientierten Monofilamentscharen aus unterschiedlichem Polymer bestehen. Gelege sind in der Regel nur dann für den Einsatz in der vorliegenden Erfindung geeignet, wenn zumindest eine der beiden Filamentscharen in gereckter Form vorliegt Bet Gelegen können sowohl gereckte Monofilamentfäden als auch Homofilamente zum Einsatz kommen. Der Winkel der sich kreuzenden Filamentscharen kann prinzipiell beliebig sein. Der Winkel von 90° wird aus praktischen Gründen jedoch bevorzugt. Die Filamentscharen des Geleges oder Plastiknetzes sind vorzugsweise parallel, in Maschinenlaufrichtung und die zweiten Filamentscharen quer d.h. im 90° Winkel zu Maschinenlaufrichtung ausgerichtet. Der Abstand zwischen den ersten parallel in Maschinenlaufrichtung ausgerichteten Filamenten liegt üblicherweise im Bereich zwischen ca. 0,5 und ca. 20 mm, vorzugsweise zwischen 2 und 10 mm und die der zweiten parallel ausgerichteten Filamentscharen zwischen 3 und 200 mm. Die ersten Filamentscharen tragen üblicherweise zu über 50 bis zu 100%, vorzugsweise zu 70 bis 100 % und ganz besonders bevorzugt 100 % des gesamten Flächenschrumpfes bei. Im letzteren Fall entstehen exakt ausgebildete Wellungen bzw. Korrugationen.

Die zweiten Filamentscharen tragen üblicherweise zu 0 bis 50 %, vorzugsweise 0 - 30% und ganz besonders bevorzugt zu 0% zum Gesamtflächenschrumpf bei.

Neben den bereits beschriebenen schrumpfenden bzw. geschrumpften Flächengebilden können auch Gewebe und Gewirke eingesetzt werden, mit der Maßgabe, daß zumindest eine der beiden Vorzugsrichtungen. d.h. beim Gewebe die Kette oder der Schuß aus schrumpfenden bzw. geschrumpften Fasern besteht.

Der zur Schrumpfung eingesetzte Vliesstoff kann vor seiner Laminierung zu einem Komposit einem Längungsprozeß unterworfen worden sein. Vorzugsweise wird der Vliesstoff durch mechanische Kräfte in Maschinenlaufrichtung gelängt und - sofern er aus vollverstreckten Fasern besteht - dementsprechend in Querrichtung gekürzt, d.h. er erleidet einen Breitenverlust.

Solche sog. Neck-in-Stretch-Prozesse führen zu einer deutlichen Umorientierung der Faser in dem Vliesstoff in Richtung der ausgeführten Reckung. Eine solche Umorientierung kann dadurch leichter beigeführt werden, daß während des Reckprozesses Bindungen innerhalb des Vliesstoffes durch Temperaturerhöhung gelöst oder stark gelockert werden und die Umorientierung der Fasern durch Abkühlung auf Raumtemperatur konserviert wird. Solche Umorientierungen der Fasern werden dann bevorzugt, wenn zuvor ein isotroper Vliesstoff oder ein solcher mit einer nur geringen Vorzugsausrichtung der Fasern vorliegt bzw. wenn die Schrumpfung bevorzugt nur in einer Richtung und eine klare Wellung im Vliesstoff erwünscht ist.

Die Erfindung betrifft auch ein Verfahren zur Herstellung des weiter oben definierten dreidimensional strukturierten Faserflächengebildes umfassend die Maßnahmen:

a) Kombination von mindestens einem Stapelfaserflor als Außenlage mit einem schrumpffähigen Flächengebilde,
b) Verschweißen zwischen dem Stapelfaserflor und dem schrumpffähigen Flächengebilde in Form eines Linienmusters, vorzugsweise durch Hitze und Kalanderdruck und/oder durch Ultraschall, wobei das Linienmuster senkrecht zur Richtung des stärksten Schrumpfes des schrumpffähigen Flächengebildes verläuft,
c) Erhitzen des erhaltenen Verbundes auf eine solche Temperatur, dass der Schrumpf des schrumpffähigen Flächengebildes ausgelöst wird und sich regelmäßig in Bezug auf die Flächenebene alternierend auftretende Erhebungen und Vertiefungen ausbilden.

Das thermische Verschweißen von Stapelfaserflor(en) und schrumpffähigem Flächengebilde kann auf beliebige Arten erfolgen, beispielsweise durch Kalandrieren mit einem Prägekalander, dessen eine Walze ein regelmäßiges Linienmuster aufweist, oder durch Verschweißen mit Ultraschall oder mit Infrarotstrahlung, die jeweils in einem vorbestimmten Muster auf den Vliesstoff einwirken.

Der erfindungsgemäße Verbund zeichnet sich in Bezug auf sein niedriges Flächengewicht durch eine hohe Dicke aus. Die alternierend auftretenden Erhebungen und Vertiefungen schaffen Raum für die Aufnahme von niedrig viskosen bis hochviskosen Flüssigkeiten, flüssigen Mehrphasensystemen, wie Aufschwemmungen, Dispersionen und Emulsionen oder sonstigen, auch Festkörper enthaltenden dispersen Systemen, sowie festen Partikeln und Stäuben aus der Luft oder Gasen. Diese Fluids oder festen Partikel können entweder die Räume zwischen den alternierend auftretenden Erhebungen und Vertiefungen vollständig oder partiell ausfüllen oder aber nur die Oberfläche des erfindungsgemäßen Verbundes mit einer Schicht bedecken.

Der erfindungsgemäße Verbund lässt sich insbesondere auf den Gebieten der Filter für die Flüssig-, Staub- und/oder Partikelfiltration, als hochvolumige Aufnahme- und Verteilerschicht in Hygieneartikeln, insbesondere in Windeln oder der Damenhygiene, sowie als Verhakungsteil für Klettverschlüsse einsetzen. Diese Verwendungen sind ebenfalls Gegenstand der vorliegenden Erfindung.

Die nachfolgenden Abbildungen erläutern die Erfindung näher.

Abbildung 1 beschreibt eine Form der Korrugationen (Hügel/Wellungen)
Abbildungen 2a, 2b und 2c stellen Details aus der Abbildung 1 dar.
Abbildungen 3 und 4 beschreiben die Oberfläche einer Kalanderwalze.
Abbildungen 5a und 5b stellen den Fall eines Schrumpfes von jeweils 50% in Maschinenlaufrichtung und quer zur Maschinenlaufrichtung dar.
Abbildungen 6a und 6b zeigen einen erfindungsgemäßen Verbund mit linearem Schrumpf quer zur Maschinenlaufrichtung
Abbildungen 7a und 7b zeigen einen erfindungsgemäßen Verbund mit linearem Schrumpf in Maschinenlaufrichtung
Abbildungen 8a und 8b beschreiben einen erfindungsgemäßen Verbund mit linearem Schrumpf quer zur und in Maschinenlaufrichtung
Abbildungen 9 zeigt eine perspektivische Ansicht des in Abbildung 8b dargestellten Verbundes

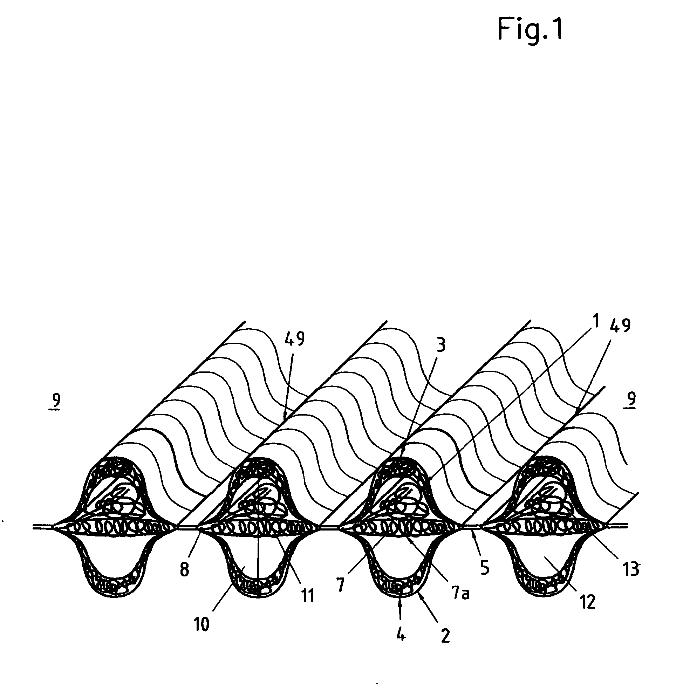

Eine der zahlreichen Varianten des erfindungsgemäßen Faserflächengebildes wird in Abb. 1 schematisch dargestellt. In diesem Fall besteht der Verbund aus insgesamt drei Vliesstofflagen.

(1) und (2) sind jeweils ungeschrumpfte Lagen aus Stapelfaserfloren, die mit Hilfe von Druck und Temperatur oder durch Ultraschallverschweißung in Form von ununterbrochener Linien auf den in der Mitte des Verbundes positionierten Faserflor eines dritten Vliesstoffes (7) vor der Schrumpfbehandlung aufgeschweißt worden sind. Die drei Vliesstoffschichten sind an den stegartigen bzw. linienförmigen, parallel zueinander ausgerichteten Verschweißstellen (5) innig miteinander verbunden. In dem in Abbildung 1 beschriebenen Verbund sind sowohl die Fasermischungen als auch Flächengewichte der beiden Lagen aus Stapelfäserfloren (1) und (2) identisch, so daß nach dem Schrumpf der Vliesstoffschicht (7) eine in Querschnitt genau spiegelbildliche Doppelwelle entsteht mit gleicher Wellenhöhe (10) und (11). Unter Wellenhöhe wird der maximale Abstand der Welle von dem Zentrum des Verbundes verstanden. Im Bereich der Scheitel (3) und (4) der spiegelbildlichen Wellungen sind die Fasern der Lagen aus Stapelfaserfloren (1) und (2) am schwächsten verdichtet. Die Verdichtung nimmt vom Scheitel (3) bzw. (4) zur Stelle der Verschweißung (5) immer stärker zu und erreicht dort sein absolutes Maximum. Die geschrumpfte Vliesstofflage (7) ist in der Mitte (7a) zwischen den stegartigen Verschweißungen (5) am schwächsten und innerhalb der Verschweißungen (5) am stärksten gebunden.

Selbstverständlich können die Lagen aus Stapelfaserfloren (1) und (2) auch unterschiedlich aufgebaut sein und unterschiedliche Flächengewichte aufweisen. Die Schrumpfung im Falle der Abbildung 1 erfolgte ausschließlich in Richtung entlang der Linie 9 --- 9, wobei diese Richtung mit der Maschinenlaufrichtung (Längsrichtung) identisch ist. Durch die wellenförmigen Aufwerfungen der Lagen aus Stapelfaserfloren (1) und (2) entstehen spiegelbildlich angeordnete Hohlräume (12) und (13).

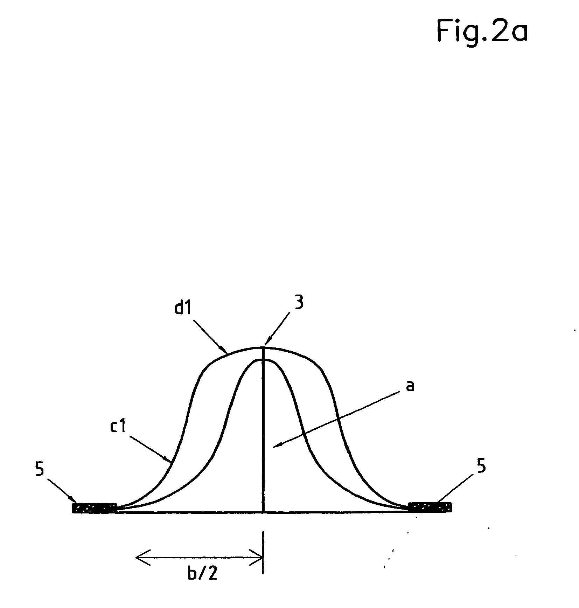

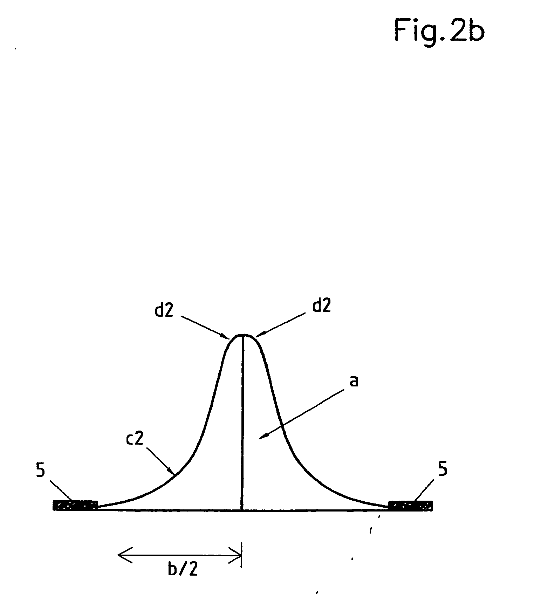

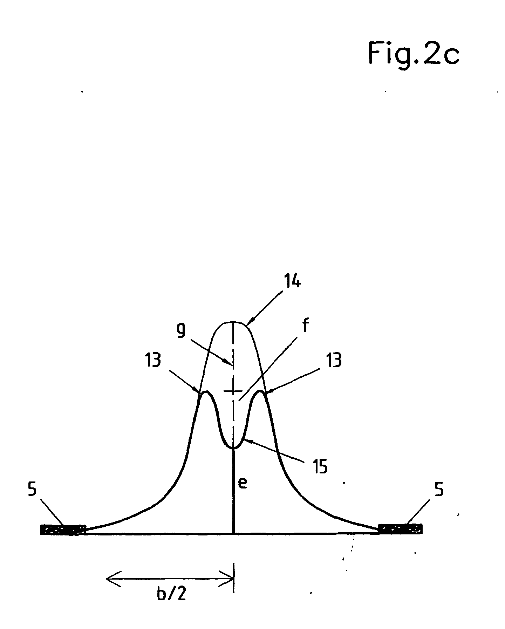

In den Abbildungen 2a, 2b und 2c ist die obere Hälfte der spiegelbildlichen Wellung im Querschnitt, d.h. entlang der Linie 9 ----- 9 dargestellt. Die Wellung erstreckt sich, wie in Abbildung 2a dargestellt, von einer Verschweißstelle (5) über den Scheitel (3) zu der zweiten Verschweißstelle (5). Der Wendepunkt der Wellung (c1) und der zweite Wendepunkt (d1) und damit die "Bauchigkeit" der Wellung hängen stark ab von der Drapierfähigkeit bzw. Verformbarkeit des Stapelfaserflors (1) und (2). In Abbildung 2a ist ein Stapelfaserflor mit höherer Steifigkeit (geringerer Drapierfähigkeit) als in Abbildung 2b dargestellt. Bei sehr leichten Stapeffaserflorgewichten mit sehr schwacher Bindung innerhalb der Stapelfaserflorschicht bzw. nur punktueller Bindung kann der Fall eintreten, daß sich der Gipfel (14) der Wellung wegen zu geringer Steifigkeit in sich zusammenfällt, wie dies in Abbildung 2c dargestellt ist. Es bilden sich dadurch zwei neue Gipfel (13) aus, die im Idealfall symmetrisch zur Mittelachse g angeordnet und von gleicher Gestalt sind.

Das Verhältnis a/0,5b der Höhe a der Wellung zum halben Abstand b/2 zwischen zwei benachbarten Verschweißlinien (5) und die Drapierfähigkeit der beiden Lagen aus Stapolfaserflor (1) und (2) bestimmen im wesentlichen die Gestalt der Wellung. Die Höhe a im Verhältnis zu b/2 ist bestimmt durch das Verhältnis den Abstand der Verschweißungsbereiche (5) vor und nach der Schrumpfung. Je höher dieses Verhältnis (b vor) zu (b nach) ist desto größer wird das Verhältnis a/0.5(b nach). Der Flächenanteil im Verbund, der durch Wellungen bzw. Hügel abgedeckt ist, im Verhältnis zur Gesamtfläche nach dem Schrumpf hängt ebenso von dem Flächenanteil der nicht an (7) gebunden Flächen vor dem Schrumpf, d.h. nach der Verfestigung zu einem Verbund, und dem Maße der Flächenverminderung durch Schrumpf ab. Die Anzahl der Wellungen bzw. Hügel pro m$^2$ wird ebenso von der Höhe des Flächenschrumpfes bestimmt. Die Größe der Wellungen bzw. der Abstand b nach dem Schrumpf bzw. der Hügel sind ebenfalls bestimmt durch die Größe der nicht durch der Verschweißungsbereiche (5) gebunden Flächen und dem Verhältnis der Flächen nach und vor dem Schrumpf.

Die Form der Erhebungen bzw. Aufwölbungen im geschrumpften Verbund bzw. deren Verformungen nach dem Schrumpf hängt von der Form der nicht mit der Mittelschicht (7) an den Schweiß- bzw. Bindungsflächen (5) verbunden Flächen, dem Gesamtflächenschrumpf und dem Verhältnis des Schrumpfes in Maschinenlaufrichtung und quer zur Maschinenlaufrichtung ab. Im Falle von parallel in Maschinenlaufrichtung ( bzw. allgemein in einer Vorzugsrichtung) in den Verbund eingebundene stark verstreckte Mono- oder Multifilamente tritt ein sogenannter linearer Schrumpf ein, worunter wir den Schrumpf in ausschließlich dieser Vorzugsrichtung verstehen.

In den diversen Ausgestaltungen der Erfindung sind die Fasern oder Anteile der Fasermischung der nicht schrumpfenden Vliesstoffaußenlagen des 3-schichtigen Komposites auf die schrumpfenden Zentrallage mehr oder weniger abzustimmen. Die Weichheit bzw. Starrheit dieser 3D(=dreidimensional)-strukturierten Außenlagen kann durch Wahl der verwendeten Fasern in weiten Grenzen verändert werden. Die Ausgestaltung dieser 3D-Vliesstoffschichten hängt weitgehend von den geforderten Eigenschaften bzw. der sie fordernden Anwendungen ab.

Für die Ausgestaltung der beiden zu 3D-Strukturen verformten Außenschichten des Verbundes und deren Strukturintegrität ist es von wesentlicher Bedeutung, ob die schrumpfauslösende Mittelschicht von poröser oder dichter bzw. undurchlässiger Struktur ist, d.h. ob sie aus Fasern, Netzen, Gelegen oder undurchlässigen Folien besteht.

Bei dem Einsatz von Folien wird die Trennkraft zwischen den 3D-Vliesstoffschichten und der Folie ausschließlich durch die Güte der Bindung zwischen Fasern und Folie an der Grenzfläche zur Folie festgelegt. Die Folie wirkt als Trennschicht für die obere und unter 3D-Vliesstofflage. Zur Erreichung ausreichender Trennkräfte / Verbundkräfte zwischen Folie und 3D-Vliesstofflage ist es vorteilhaft, wenn Folie und Fasern (zumindest ein Anteil einer Fasermischung) miteinander haftungsverträglich sind. Dies wird bekanntermaßen dadurch erreicht, daß Folie und Faser bzw. ein Faserbestandteil von Biko-Fasem bzw. Faseranteile der Fasermischung aus chemisch ähnlich oder gleich aufgebauten Polymeren bestehen. Wird als schrumpfauslösende Folie beispielsweise eine durch das Blasverfahren biaxial gereckte PP-Folie (PPO-Folie) verwendet, so ist im Sinne einer guten Haftung vorteilhaft, wenn zumindest hohe prozentuale Anteile (von mindestens 20-30 Gew.%) der zur 3D-Struktur verformten Lagen aus Stapelfaserflor ebenfalls aus Polyolefin oder Polyolefincopolymer-Homofilfaser bestehen bzw. bei Verwendung von Bikomponentfasem die bindenden, tieferschmelzende Komponente aus Polyolefin besteht.

Beispiele für solche auf PP-Film gut haftende Fasern sind Fasern aus PP, PP-Copolymer, PE oder PE-Copolymer bzw. Bikomponentenfasern, deren Kern beispielsweise aus Polyester und deren Mantel aus PP, PE oder Copolymeren derselben bestehen. Das als Klebekomponente fungierende Faserpolymer kann ebenfalls mit einem Tackyfier = Klebrigkeitsmacher oder Weichmacher versetzt worden sein. Für eine zerstörungsfreie oder nicht schädigende Wirkung während der Verschweißung mit Ultraschall bzw. Hitze und Druck des oder der Faserflore auf die Folie sollte der Schmelz- oder thermoplastische Erweichungspunkt der niedriger schmelzenden Faserkomponenten nicht höher als derjenige der gereckten Folie sein oder vorzugsweise mindestens 5 bis 10°C unter dem der Folie sein.

Eine weitere Möglichkeit die Folie bzw. den Kern der Folie vor mechanischer Zerstörung oder Schwächung zu schützen besteht in dem Einsatz einer sogenannten beidseitig oder einseitig coextrudierten, gereckte Folie. Darunter wird im Rahmen dieser Beschreibung eine 2- bis 3-lagige Folie verstanden, deren Kern aus einem thermisch beständigeren Polymer besteht als dem Polymer, das die eine oder die beiden Außenlagen bildet. Als Beispiele hierfür seien eine 3-schichtige, gereckte Folie mit PPO als Kern und zwei (im Gewicht meist leichteren) Außenschichten aus Polyethylen, Polyolefincopolymeren oder EVA (Copolymer aus Ethylen und Vinylacetat) genannt.

Werden erfindungsgemäß gereckte Netze oder Gelege als schrumpfauslösende Schicht eingesetzt, so spielt die Abstimmung der Polymerzusammensetzung der Faser des zur 3D-Struktur verformten Vliesstoffes zu der schrumpfenden Mittelschicht zum Zwecke der Vliesstoff/Netzhaftung eine weitaus geringere bis überhaupt keine Rolle. Die Flächenbedeckung durch die orientierten Monofilamente in Längs- und Querrichtung in einem Gelege/Netz ist vernachlässigbar klein im Verhältnis zur Gesamtfläche. Die Bindung der beiden Lagen aus Stapelfaserflor ober- und unterhalb des Geleges/Netzes erfolgt im wesentlichen durch die offenen, nicht filamentbedeckten Flächen hindurch. Die Haftung der Fasern auf den Monofilamenten des Netzes/Geleges sind beinahe unbedeutend. Für eine ausreichende Verbundhaftung ist es vorteilhaft, wenn die obere 3D-Lage aus Stapelfaserflor aus gleich oder chemisch ähnlichen, d.h. kompatiblen Bindefasern aufgebaut sind, wie die das Gelege/Netz bildenden Fasern, wobei deren Anteil in beiden Vliesstofflagen gleich oder unterschiedlich sein kann.

Das gereckte Netz kann wie die Folie coextrudiert worden sein, wobei aus oben genannten Gründen die Verwendung eines coextrudierten Netzes keinen deutlichen Beitrag zur Verbundhaftung beiträgt.

Es hat sich als vorteilhaft erwiesen, die Herstellung des 2- bzw. 3-lagigen Verbundes und deren Schrumpfung zu 3D-strukturierten Verbunden in getrennten Schritten vorzunehmen. Es ist außerdem vorteilhaft, die zur Verbundhaftung zur Strukturintegritätsverbesserung führenden Bindefasern so auszuwählen, daß deren Erweichungs- bzw. Hotmeltklebe-Bereich ca. mindestens 10°C, vorzugsweise mind. 15°C unterhalb desjenigen der schrumpfauslösenden Schicht liegt. Die erfindungsgemäße Erzeugung von 3D-Strukturen durch Schrumpf erwies sich als vorteilhaft für die Prozeßsteuerung, die Gleichmäßigkeit des Flächenschrumpfes und die Ausbildung der Güte der 3D-Struktur durch zwei getrennte Schritte. Eine Zusammenlegung der beiden Verfahrensschritte im Falle einer Laminierung durch Hitze und Druck ist zwar prinzipiell im Kalanderspalt bzw. durch Umschlingung einer beheizten Kalanderwalze zum Zwecke der Erhöhung der Verweildauer der Ware möglich, aber weniger empfohlen, weil dieses mit einer drastischen Herabsetzung der Produktionsgeschwindigkeit verbunden ist.

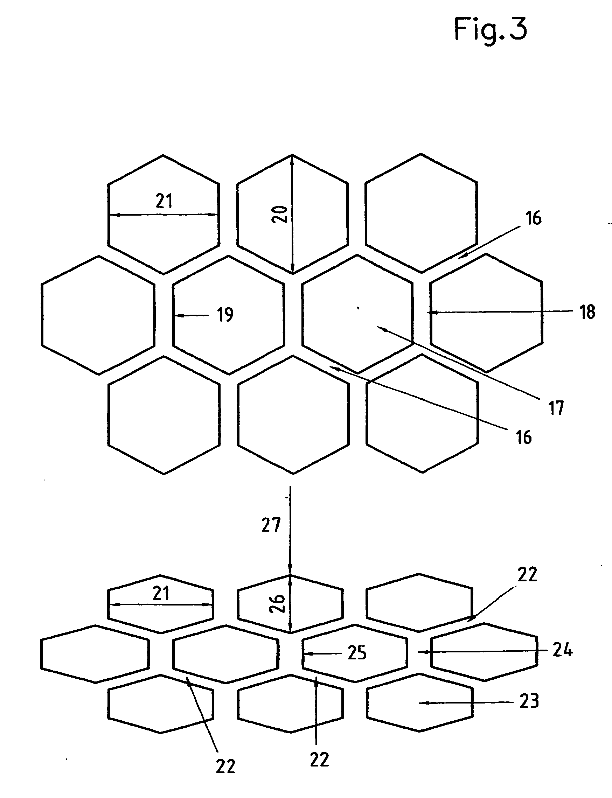

In Abbildung 3a ist die Oberfläche einer Kalanderwalze mit Vertiefungen in Form eines gleichseitigen Hexagons in Aufsicht wiedergegeben. Das gleichseitige Hexagon ist prinzipiell bereits durch deren Fläche (17) und Kantenlänge (19) genau definiert. In der Abbildung 3a ist darüber hinaus noch die Länge (20) von der oberen zur unteren Spitze, d.h. in Maschinenlaufrichtung (27) und die Breite quer zur Maschinenlaufrichtung des Hexagons zur weiteren Definition des Hexagons angegeben. Die beiden kürzesten Abstände (16) und (18) zwischen den gleichseitigen Hexagons sind identisch und geben den Rahmen der Hexagons und damit die ununterbrochen Verschweißlinien bzw. Verschweißmuster mit Honigwabenstruktur in dem ungeschrumpften, durch Hitze und Druck bzw. durch Ultraschall verschweißten Verbund wieder.

In Abbildung 3b ist der Fall eines ausschließlich in Maschinenlaufrichtung (27) geschrumpften Verbunds mit einem Linearschrumpf von 50% wiedergegeben. Ein solcher Schrumpf tritt beispielsweise auf, wenn als schrumpfenden Flächengebilde ein extrudiertes Netz eingesetzt wird, das nur in Maschinenlaufrichtung gereckt worden ist.

Durch diesen 50%igen Schrumpf in nur einer vorzugsrichtung (beispielsweise Maschinenlaufrichtung) verkürzt sich in dem Verbund der Abstand (20) um die Hälfte auf den Abstand (26) und die Kantenlänge (19) ebenfalls um die Hälfte auf die Kantenlänge (25), während der Abstand (21) vor und nach dem Schrumpf unverändert bleibt. Die Fläche (17) des gleichseitigen Hexagons verkleinert sich auf die Fläche (23) und aus dem gleichseitigen Hexagon vor dem Schrumpf resultiert ein in Maschinenlaufrichtung um 50% gestauchtes ungleichseitiges Hexagon. Daraus ergeben sich aus den gleichen Abständen (16) und (18) nunmehr nach dem Schrumpf die ungleichen Abstände (22) und (24), wobei (24) > (22) ist.

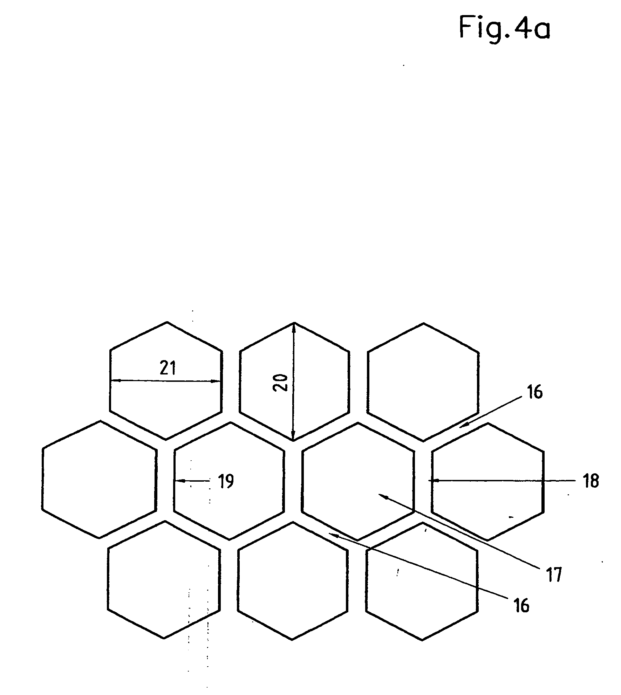

In Abbildung 4a ist die gleiche Oberfläche einer Kalanderwalze wie in Abbildung 3a dargestellt.

In Abbildung 4b ist der Fall eines ausschließlich quer zur Maschinenlaufrichtung (27) geschrumpften Verbunds mit einem Linearschrumpf von 50% wiedergegeben. Ein solcher Schrumpf tritt beispielsweise auf, wenn als schrumpfenden Flächengebilde ein extrudiertes Netz eingesetzt wird, das nur senkrecht zur Maschinenlaufrichtung gereckt worden ist.

Durch diesen 50%igen Schrumpf in nur einer Vorzugsrichtung verkürzt sich in dem Verbund der Abstand (21) um die Hälfte auf den Abstand (28), während der Abstand (20) vor und nach dem Schrumpf unverändert bleibt. Die Fläche (17) des gleichseitigen Hexagons verkleinert sich auf die Fläche (29) und aus dem gleichseitigen Hexagon vor dem Schrumpf resultiert ein senkrecht zur Maschinenlaufrichtung um 50% gestauchtes ungleichseitiges Hexagon. Daraus ergeben sich aus den gleichen Abständen (16) und (18) nunmehr nach dem Schrumpf die ungleichen Abstände (30) und (31), wobei (31) > (30) ist.

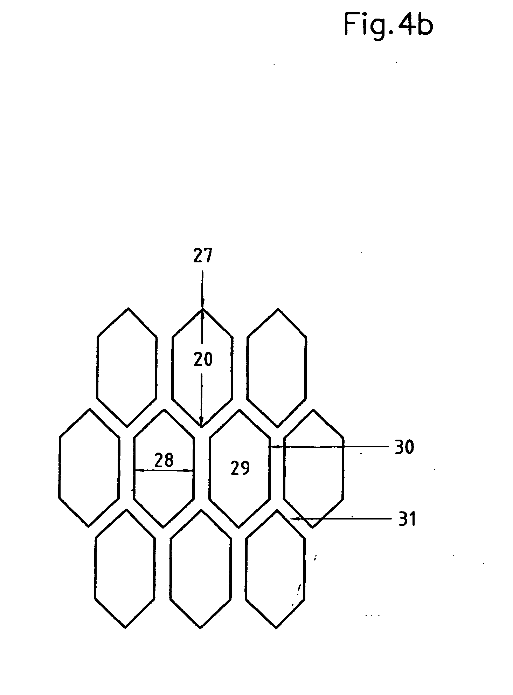

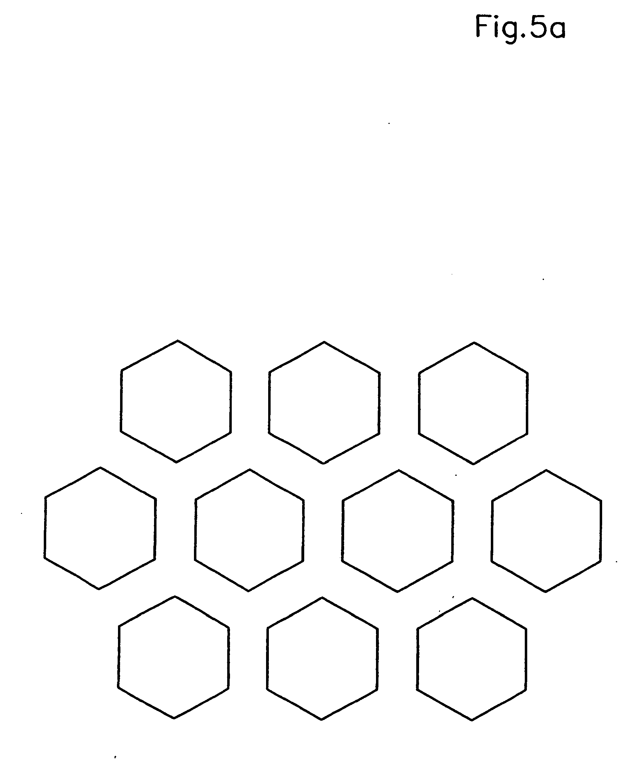

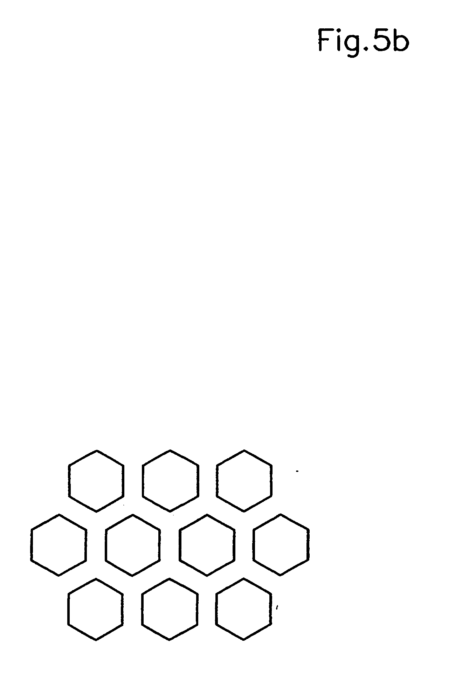

In den Abbildungen 5a und 5b ist der Fall eines Schrumpfes von jeweils 50% in Maschinenlaufrichtung und quer zur Maschinenlaufrichtung dargestellt. Der Gesamtschrumpf beträgt 75 %. In diesem Fall verkleinern sich die gleichschenkligen Hexagons entsprechend und bleiben gleichschenklig. Die kürzesten Abstände zwischen den Schenkeln verkürzen sich um 50%.

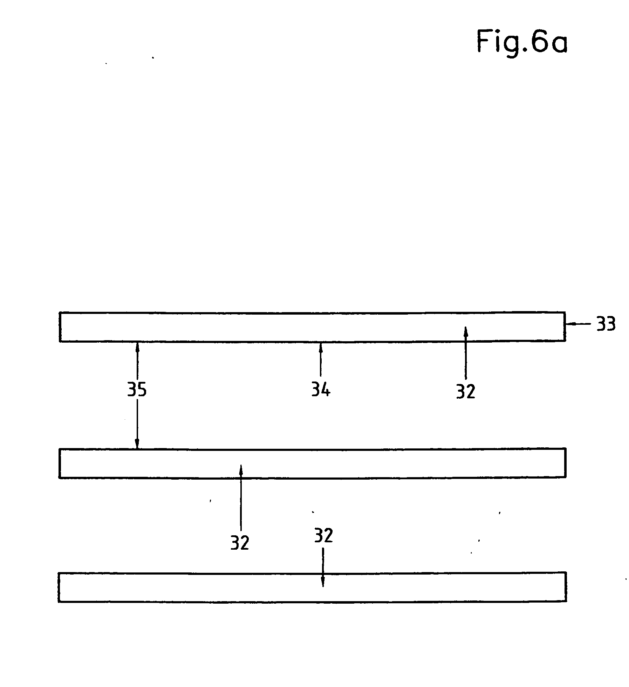

In Abbildung 6a ist die stark vergrößerte Draufsicht eines Verbundes vor der Schrumpfbehandlung wiedergegeben. Der Verbund ist über die gesamte Warenbreite (34) mit parallel zueinander angeordneten Linien oder Balken der Dicke (33), der Balkenfläche (32) und des Balkenabstands (35) durch Hitze und Druck bzw. durch Ultraschall gebunden. Diese Prägebindung wird im Rahmen der vorliegenden Beschreibung als LS (Linear Seal) bezeichnet

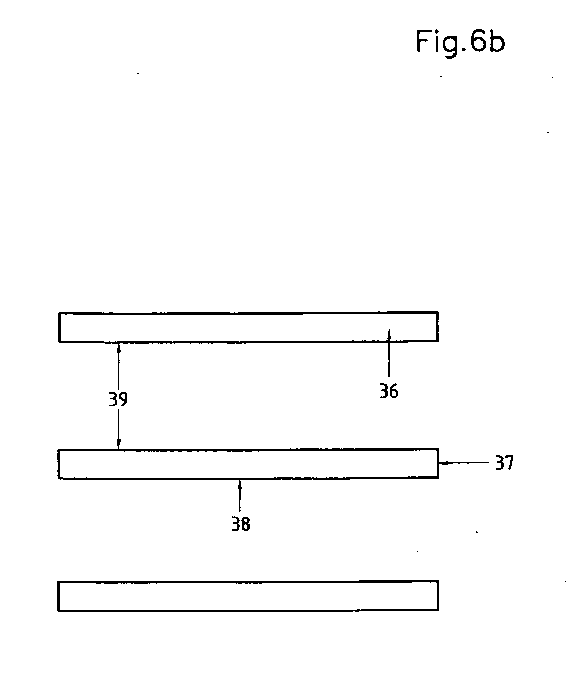

Der in Abbildung 6b wiedergegebene Zustand entsteht nach einem ausschließlich quer zur Maschinenlaufrichtung ("MLR") erfolgten Schrumpf von ca. 25% . Die Warenbreite (34) in Abbildung 6a verkürzt sich also um 25% auf die Warenbreite (38) in Abbildung 6b. Dadurch, daß in MLR kein Schrumpf erfolgt, bleibt die Dicke der Balken unverändert, d.h. (33) entspricht (37) und der Abstand derselben zueinander bleibt ebenfalls konstant, d.h. (35) entspricht (39).

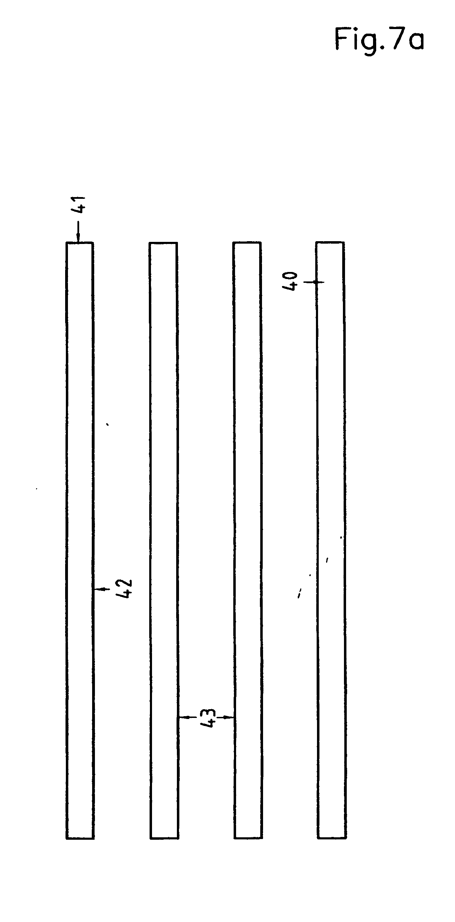

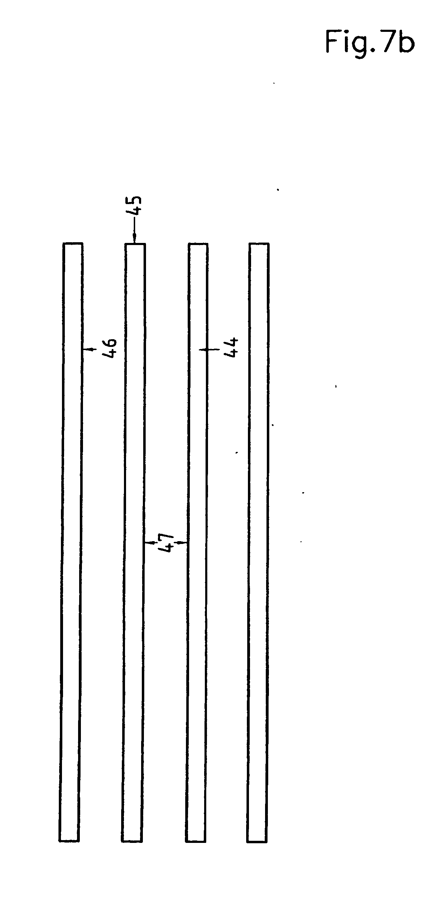

In den Abbildungen 7a und 7b ist ebenfalls wieder die stark vergrößerte Draufsicht eines LS-gebundenen Verbundes vor und nach Schrumpf dargestellt. In diesem Fall ist ein Schrumpf von 23% ausschließlich in MLR (48) erfolgt. Die Warenbreite bleibt dementsprechend unverändert (unter der Annahme, daß keine Verzüge auftreten) und damit auch die Länge der Balken, d.h. (42) entspricht (46). Die Fläche (40) der Balken vor dem Schrumpf reduziert sich um 23 % auf die Fläche (44) und ebenso der Abstand (43) der Balken vor dem Schrumpf um 23 % auf den Abstand (47) nach dem Schrumpf und dementsprechend auch Balkenbreite (41) vor dem Schrumpf auf die Balkenbreiten (45) nach dem Schrumpf.

Der in Abb. 7b in der Draufsicht dargestellte 3-lagige Verbund mit ausschließlich linearem Schrumpf in der MLR ergibt eine perspektivische Ansicht wie in Abbildung 1 dargestellt mit klar ausgebildeten Wellen, wobei die Höhe (11) der Wellen an deren Scheitelpunkt (3) entlang der Linie (49) über die gesamte Warenbreite konstant ist.

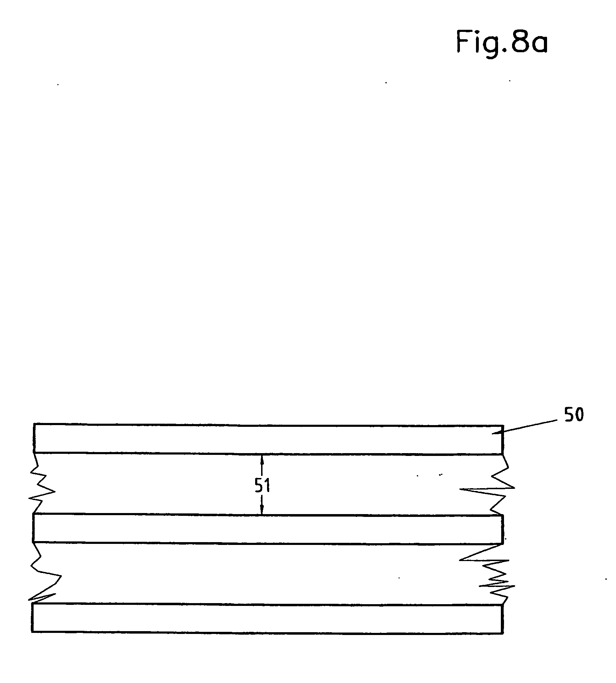

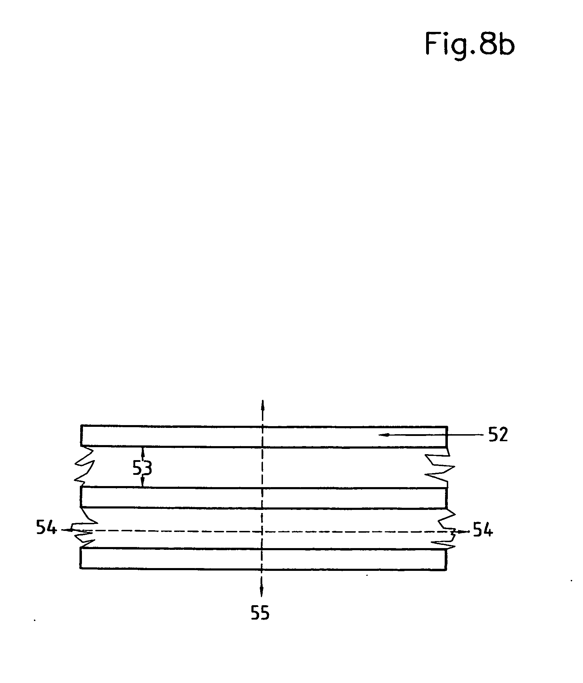

Der Fall eines Schrumpfes an einem dreilagigen Verbund, wie z.B. aus Stapelfaserflor/Schrumpffolie/Stapelfaserflor ist in den Abbildungen 8a und 8b wiedergegeben, d.h. sowohl die Balkenbindefläche (52) als auch der Balkenabstand (53) verkleinern sich entsprechend des Schrumpfes in quer zur MLR und in MLR nach dem Schrumpf auf (54) bzw. auf (55).

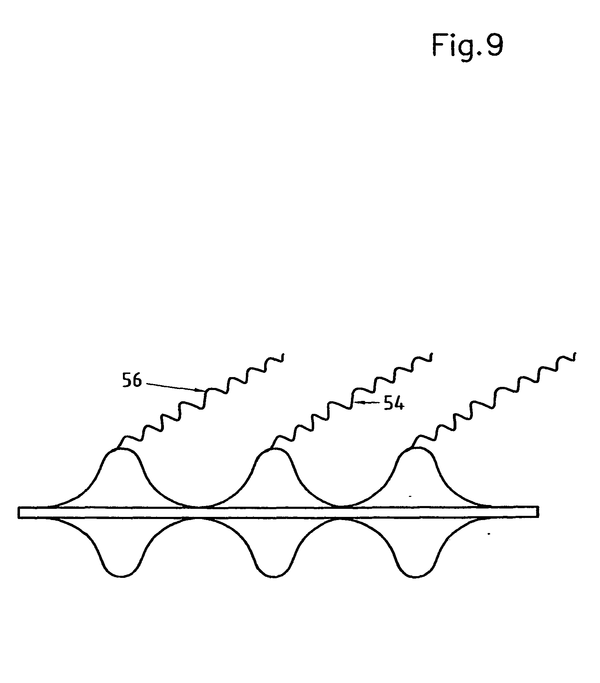

In Abbildung 9 ist die perspektivische Ansicht des in Abb. 8b dargestellten Verbundes wiedergegeben, wobei der Querschnitt der perspektivischen Ansicht entlang der Linie 57 und der Zustand entlang der Linie 56 dargestellt ist.

Man kann dabei erkennen, daß die Höhe der Wellungen entlang der Linie 56 über die gesamte Warenbreite nicht immer gleich ist sondern durch den Querschrumpf selbst auch wieder einer Mikrowellung (58) enthält.

Die nachstehenden Beispiele erläutern die Erfindung ohne diese zu begrenzen.

Beispiel 1:

Es wurden zur Florlegung eine Krempel mit Querleger (bezeichnet mit K1), eine Krempel über dem Faserablegeband (bezeichnet mit K2) mit Ablegung der StapelFasern in Maschinenlaufrichtung und wieder eine Krempel mit Querleger (bezeichnet mit K3) verwendet. Dadurch konnte der gewünschte dreischichtige Kompositaufbau des Vliesstoffes realisiert werden. Die mit K1, K2 und K3 abgelegten Faserflorschichten wurden mit F1, F2 bzw. F3 gekennzeichnet.

Sowohl die Faserzusammensetzung, die Faserorientierung als auch die Faserflorgewichte von F1 und F3 waren identisch. F1 und F2 bestanden aus 40% einer Kem-/Mantel-Faser aus den beiden Komponenten Polyethylenterephthalat als Kern und einem Copolyester mit einem Schmelzbereich von 91 - 140°C mit einem Titer von 17 dtex und einer Schnittlänge von 64 mm und 60 % einer Homofilfaser aus Polyethylenterephthalat mit einem Titer von 8,8 dtex und einer Schnittlänge von 60 mm. F1 und F3 wurden quer zur Maschinenlaufrichtung abgelegt (hier mit "cd" für cross machine direction gekennzeichnet). Das Florgewicht von F1 und F2 betrug jeweils 10 g/m$^2$. K2 wurde zwischen K1 und K3 in Maschinenlaufrichtung gelegt (hier mit "md" für machine direction gekennzeichnet) und bestand aus einem 10 g/ m$^2$ schweren Flor aus 100% Polypropylenfasem mit einem Titer von 12 dtex und einer Schnittlänge von 60 mm.

Alle in Beispiel 1 eingesetzten Fasern waren vollverstreckt. Die Kräuselung der Bikomponentenfaser und der Polyäthylenterephthalat-Faser war zweidimensional und erfolgte nach dem Stauchkammerprinzip. Die Polypropylenfaser der Faserschicht F2 wies eine dreidimensionale Spiralkräuselung auf. Solche Fasern werden bevorzugt eingesetzt, wenn ein hoher Kompressionswiderstand der Faserschichten und vergleichsweise hohe Volumina erzeugt werden sollen (sogenannte High- Loft-Fasern).

Die Schmelzpunkte der Polyethylenterephthalatfaser bzw. des Polyethylenterephthalatfaserkemes der Heterofilfaser waren mit über 90°C soweit auseinander, daß bei Erwärmung des Kompositvliesstoffes auf Schrumpftemperatur der Polypropylenfaser ausschließlich diese einen Schrumpf erfuhr.

Das aus den drei Floren F1, F2 und F3 aufgebaute dreilagige Komposit wurde bei 80°C durch Passage zweier Stahlpresswalzen, die auf eine Temperatur von 80°C aufgeheizt waren, leicht verdichtet, bevor des dem Kalanderwalzenpaar zugeführt wurde.

Das Kalanderwalzenpaar bestand aus einer glatten und einer gravierten Stahlwalze. Die gravierte Stahlwalze wies parallel zueinander quer zur Maschinenlaufrichtung orientierte gerade Linien oder Streifen mit einer Breite von 1,0 mm auf. Der Abstand der parallen Streifen, gemessen jeweils von Mitte zu Mitte betrug 4,0 mm. Die Verschweißfläche war 25 %. Die Erhöhungen der Streifen waren konusförmig. Die Gravurtiefe betrug 0,9 mm.

Beide Walzen waren auf eine Temperatur von 130°C aufgeheizt. Der Pressliniendruck betrug 65 N/mm. Aufgrund des symmetrischen Aufbaues des dreilagigen Komposites, d.h. aufgrund der Tatsache, daß F1 mit F3 identisch war, spielte es keine Rolle, welche der beiden bei Passage des Kalanders Kontakt zur gravierten Walze hatte.

Die auf diese Weise durch Hitze und Druck verfestigte Ware wurde in einem Spannrahmen einer Temperatur von 160°C über eine Zeitraum von 30 Sekunden in einem Trockenschrank ausgesetzt. Durch diese thermische Behandlung schrumpfte die Ware um 45,1% in md und um 20,2% in cd.

Trotz des Auskämmens der Faserschicht F2 in md erfolgte dennoch auch ein geringer Schrumpf in cd aufgrund der Fasernkräuselung und deren damit verbundenen gewissen Faserquerorientierungsanteil. Aus den Schrumpfbeträgen in md und cd errechnete sich ein Flächenschrumpf von 56,7 %. Der Flächenschrumpf kann aber auch mit der nachfolgend aufgeführten mathematischen Beziehungen (i), (ii) und (iii) aus den Flächengewichten in g/m² des Kompositvliesstoffes vor und nach der Schrumpfbehandlung errechnet werden, für den Fall, daß keine Einschnürung bzw. Breitenverlust durch Verzüge eingetreten ist.

$$S_O = (1 - G_v / G_n) * 100 \, [\%] \qquad\qquad (i)$$

$$S_q = (1 - b_n / b_v) * 100 \, [\%] \qquad\qquad (ii)$$

$$S_l = (1 - (G_v * b_v) / (G_n * b_n)) * 100 \, [\%] \qquad\qquad (iii)$$

Dabei bedeuten in diesen Formeln

$S_o$ = Flächenschrumpf in %
$S_q$ = linearer Schrumpf in Querrichtung in %
$S_l$ = linearer Schrumpf in Längsrichtung in %
$G_v$ = Flächengewicht vor dem Schrumpf in g/m²
$G_n$ = Flächengewicht nach dem Schrumpf in g/m²
$b_v$ = Warenbreite vor dem Schrumpf in m
$b_n$ = Warenbreite nach dem Schrumpf in m

Nach dem Schrumpfen der mittleren Faserschicht F2 aus 100% Polypropylen des dreilagigen Vliesstoffkomposites entstanden die in Abb. 1 wiedergegebenen, beidseitig in die dritte Dimension ausgerichteten Wellungen Trotz des völlig symmetrischen Aufbaues des Komposites aus F1, F2 und F3 waren die Scheitelpunkte der Wellungen auf der Seite der Gravurwalze geringfügig höher als diejenigen, die bei der Kalandrierung der glatten Stahlwalze zugewandt waren.

Diese Unterschiede in der Scheitelhöhe beidseitig der geschrumpften Faserschicht F2 erwiesen sich als umso geringer, je höher die Gravurtiefe war.

In Tabelle 1 sind Verbundaufbau und Schrumpfverhältnisse der Beispiele 1 bis 5 aufgelistet. Gemessen wurde die Dicke bei einem Auflagedruck von 780 Pa, das Flächengewicht, das Wiedererholvermögen nach einer definierten Druckbelastung und der Kompressionswiderstand.

Für die Anwendung als Aufnahme- und Verteilerschicht in Windeln spielen der Kompressionswiderstand KW, das Wiedererholvermögen W und die Kriechbeständigkeit KB eine große Rolle. Diese relativen Größen errechnen sich jeweils aus den Dicken bei zwei unterschiedlichen Druckbelastungen.

Die Dickenmessungen wurden wie folgt durchgeführt:

Die Probe wurde 30 Sekunden lang mit einem Auflagedruck von 780 Pa (8 g/cm²) belastet und die Dicke nach Ablauf dieser 30 Sekunden abgelesen. Unmittelbar danach wurde der Auflagedruck durch Gewichtswechsel an dem Dickenmeßgerät auf 6240 Pa (64 g/cm²) erhöht und nach weiteren 30 Sekunden an der exakt gleichen Meßstelle die Dicke abgelesen. KW errechnet sich aus dem Verhältnis der Dicke bei 6240 Pa und der Dicke bei 780 Pa und wird in Prozent angegeben.

Im Anschluß an die o.g. Dickenmessfolge wird an exakt derselben Meßstelle nochmals bei 780 Pa die Dicke bestimmt. Das Wiedererholvermögen W errechnet sich aus dem Verhältnis der zuerst gemessenen Dicke bei 780 Pa und der Dicke bei 780 Pa nach abgeschlossener Meßfolge und wird ebenfalls in Prozent angegeben.

Zur Bestimmung der Kriechbeständigkeit KB wurde der Prüfling 24 Stunden lang bei einem Druck von 3500 Pa (36 g/cm$^2$) bei einer Temperatur von 60°C belastet und danach die Dicke nach einer Belastung von 780 Pa bestimmt. Man erhält den Wert für KB, indem man die Dicke des bei 60°C über 24 Stunden bei 3500 Pa gepressten Prüflings durch die Dicke des ungepressten Prüflings, jeweils gemessen bei 780 Pa, teilt und mit 100 multipliziert (Angabe in Prozent).

Es wurden insbesondere bei Beispiel 2 bezogen auf das sehr günstige Verhältnis von Dicke in mm zum Flächengewicht in g/m$^2$ hohe Werte für das Wiedererholvermögen und den Kompressionswiderstand erreicht. Dies ist eine Folge der beidseitigen und spiegelbildlich ausgerichteten Wellungen.

Anforderungen mit hohem Wiedererholvermögen und Kompressionswiderstand, gepaart mit hohem Porenvolumen und hydrophiler, gegen Körperflüssigkeiten gut netzender Eigenschaften sind für Flüssigkeits- und Verteilerschichten in Windeln wohl bekannt, die zwischen dem Abdeckvliesstoff und dem absorbierenden Kern zum Zwecke eines besseren Fluid-Managements eingeschoben werden. Das Porenvolumen errechnet sich aus der Dicke des Flächengebildes (bei definiertem Auflagedruck = Belastung) bzw. als Differenz aus dem daraus resultierenden Volumen und dem Volumen, das durch die Fasern selbst belegt ist. Die Porenverteilung und Porengröße ist stark beeinflußt von dem Verhältnis Dicke zu Flächengewicht. Je gröber die Fasern und je höher die Dicke des sie bildenden Flächengebildes ist umso größer werden die Poren und umso geringer deren Anzahl. Hohes Porenvolumen und große Poren die Fluidaufnahme begünstigende Faktoren.

Die in Beispiel 1 dargelegte Variante der Erfindung eignet sich hervorragend für diese Anwendung und ist in den Belangen Flüssigkeitsmanagements anderen bekannten Produktlösungen überlegen. Um dies zu belegen wurde als Vergleich zu Beispiel 1 ein thermisch gebundener Vliesstoff mit vergleichbarem Flächengewicht und gleicher Fasermischung F1 und F3 herangezogen. Die 3 Schichten, aus denen das Komposit aufgebaut war, wurden mit S1, S2 und S3 bezeichnet. Im Falle des Beispiels 1 waren alle drei Schichten aus Fasern zusammengesetzt (F1, F2 und F3).

Aus den Werten der Tabelle 1 für Beispiel 1 und Vergleichsbeispiel ist die Überlegenheit des erfindungsgemäßen Beispieles 1 deutlich erkennbar.

Beispiel 2

In Beispiel 2 wurden die gleichen Vlieslegemethoden wie bei Beispiel 1 eingesetzt, d.h. die Fasern der F1 bzw. S1 wurden in cd, F2 bzw. S2 in md und F3 bzw. S3 wieder in cd abgelegt. Die Verfestigungsbedingungen im Kalander, die verwendete Gravurwalze und die Schrumpfbedingungen waren identisch mit Beispiel 1. Der niedrigere Schrumpfbetrag im Vergleich zu Beispiel 1 ist wohl eine Folge der höheren Florgewichte F1 und F3. Wie aus Tabelle 1 erkennbar, wurden andere Faserflorgewichte und feinere Fasertiter verwendet.

Aufgrund der feineren Fasern und des geringeren Flächenschrumpfes von 50,6 % wurden zwar in etwa der gleiche Kompressionswiderstand und ein vergleichbares Wiedererholvermögen als mit Beispiel 1 erreicht. Dies allerdings bei einer deutlich niedrigeren Dicke von 2,70 mm anstelle 3,60 mm. Die Ergebnisse sind aber dennoch im Vergleich zum Stande der Technik überlegen. Die Meßergebnisse sind in Tabelle 2 dargestellt.

Vergleichsbeispiel zu Beispielen 1 und 2

In Maschinenlaufrichtung wurde ein 70 g/m$^2$ Flor bestehend aus 50% Kern-/Mantel-Bikomponenten-Faser mit Polypropylen als Kern und High Density Polyethylen (HDPE) als Hülle mit einem Titer von 3,3 dtex und einer Schnittlänge von 40 mm und 50 % Polyethylenterephthalatfaser mit einem Titer von 6,7 tex und einer Schnittlänge von 60 mm in einem Umluftofen bei einer Temperatur von 130°C thermisch verfestigt.

Die an diesem Material durchgeführten Meßergebnisse wurde in Tabelle 2 zusammengestellt und mit denen der Beispiele 1 und 2 verglichen.

Beispiel 3:

Für die Fertigung des in Beispiel 3 beschriebenen Komposites wurden zwei Krempeln benötigt, die in Maschinenlaufrichtung (md) die Faserschicht F1 mit einem Florgewicht von 25 g/m$^2$ und eine weitere Krempel, die quer zur Maschinenlaufrichtung (cd) ein Florgewicht von 10 g/m$^2$ ablegen. Zwischen beide Flore wurde ein ausschließlich in md voll gerecktes PP-Netz mit einer Maschenweite in md von 3,2 mm und in cd von 7,7 mm und einem Flächengewicht von 30,0 g/m$^2$ eingeführt Die drei Lagen bzw. Schichten S1, S2 und S3 wurden wie in Beispiel 1 nach einer warmen Vorpressung zum Zwecke der Verdichtung dem Kalander-Nip, bestehend aus den in Beispiel 1 bereits genannten Walzen, zugeführt, wobei die Faserflorlage F1 mit dem höheren Gewicht von 25 g/m$^2$ der gravierten Kalanderwalze zugewandt war. Die Kalandrierung erfolgte bei einem Liniendruck von 65 N/mm und einer Temperatur von 150°C.

Anschließend wurde die Probe ohne Verzug 30 Sekunden lang im Trockenschrank mit einer Temperatur von 150°C belassen. Es stellte sich ein Schrumpf von 16 % ausschließlich in md ein. Aufgrund der Netzreckung nur in md blieb der Schrumpf in md völlig aus. Es bildeten sich dadurch in Ouerschnitt quer zur Maschinenlaufrichtung wieder, wie in Abb. 1 vereinfacht dargestellt, klar definierte Wellungen beidseitig der Zentralschicht aus PP-Netz S2 aus. Die Wellungshöhe der Faserschicht S3 war etwas geringer aufgrund seines Kontaktes während der Kalandrierung zur glatten Walze, weicher und weniger wiedererholend aufgrund seines feintitrigeren Faseraufbaues und des niedrigeren Flächengewichts von nur 8 g/m$^2$.

Solche asymetrisch aufgebauten Komposite mit einer weichen, weniger loftigen und leichten Feinfaserschicht und einer High-Loft-Grobfaserschicht werden dann bevorzugt eingesetzt, wenn an beide Oberflächen des Komposites völlig unterschiedliche Anforderungen gestellt werden. Völlig unterschiedliche Eigenschaften auf den beiden Seiten eines Verbundvliesstoffes sind beispielsweise an einen Gürtel gestellt, der - mit oder ohne elastische Eigenschaften entlang der Gürtellängsrichtung - gleichzeitig in seiner gesamten Fläche oder Teilfläche als Verhakungsteil (Schlaufenteil) für den Einhakungsteil eines mechanischen Verschlußsystem (Klettverschlüsse) dienen soll. Solche einander entgegengesetzte Anforderungen, wie gute Verhakungseigenschaften (durch aufgewellte Grobfaserschicht) einerseits und Textilität, Weichheit, Hautverträglichkeit andererseits, gepaart mit einer gewissen Steifigkeit (als Gürtel) lassen sich mit der Erfindung in besten Einklang finden.

Beispiel 4:

Beispiel 4 unterscheidet sich von Beispiel 3 lediglich dadurch, daß die beiden Faserflore für die Schichten S1 und S3 nicht in Maschinenlaufrichtung sondern quer zur Maschinenlaufrichtung abgelegt worden waren, wobei sich an dem kalanderverfestigten Halbmaterial ein Verhältnis der Höchstzugkräfte in md zu cd von 0,8 : 1,0 einstellte.

Unter denselben Kalandrier- und Schrumpfbedingungen wurde ein Schrumpfbetrag in md von 25% und in cd von ebenfalls 0 % erreicht. Dieses Ergebnis ist ein Hinweis darauf, daß der Schrumpf des Komposites sowohl von der Orientierung des gereckten Schrumpfmediums als auch der Orientierung der unter Prozeßbedingungen nicht schrumpfenden (oder weniger als das Schrumpfmedium schrumpfenden) Fasern des Faserflores einen deutlichen Einfluß auf den Schrumpfbetrag ausübt. Der Schrumpf wurde durch die beiden äußeren Faserflore der Schichten S1 und S3 umso weniger behindert je näher seine Fasern senkrecht zur Schrumpfrichtung, d.h. im Falle des Beispieles 4 quer zur Maschinenlaufrichtung ausgerichtet waren, je niedriger der Fasertiter und je niedriger die Faserflorgewichte von S 1 und S3 waren.

Beispiel 5:

Auf eine 15 μm starke Polyethylenfolie wurde ein 20 g/m$^2$ schwerer Faserflor aus 30 Gew.% Heterofilfaser mit einem Kern aus Polyethylenterephthalat und einem Mantel aus High Density Polyethylen (HDPE) und 70 Gew.% Polypropylen mit einem Titer von 2,8 dtex und einer Schnittlänge von 60 mm aufgelegt und dem in Beispiel beschriebenen Kalanderwalzenpaar zugeführt. Die Kalandertemperatur betrug 130°C und der Druck 65 kp. Anschließend wurde wieder 30 Sekunden lang im Ofen bei 150°C geschrumpft, wonach sich ein Schrumpf in md von 22 % einstellte.

Aufgrund der Tatsache, daß nur an eine Seite der Schrumpffolie ein Faserflor linienförmig aufgeschweißt worden bildete sich nach dem Schrumpfprozeß eine nur einseitige Wellung.

Tabelle 1: Aufbau der geschrumpften Komposite

| Beispiel Nr. | Kompositzusammensetzung S1, S2, S3 | | Gew. %[*)] g/m² | Schrumpf % in | | | Flächengewicht vor Schr | Flächengewicht nach Schr |
|---|---|---|---|---|---|---|---|---|
| | | | | md | cd | Fläche | | |
| 1 (100 % Vliesstoff, 3-lagig) | S1: | 40% PET/Co-PES dtex 17/64mm 60% PET dtex 8/60mm | 10 | | | | | |
| | S2: | 100% PP spiralgekr. dtex 12/60mm | 10 | 45,1 | 20,2 | 47,8 | 30 | 68,5 |
| | S3: | 40% PET/Co-PES dtex 17/64mm 60% PET dtex 8/60mm | 10 | | | | | |
| 2 (100 % Vliesstoff, 3-lagig) | S1: | 50% PET/Co-PES dtex 4,8/55mm 50% PET dtex 6,7/90mm | 15 | | | | | |
| | S2: | 100% PP spiralgekr. dtex 6,7/90mm | 10 | 39 | 19 | 50,6 | 40 | 81,0 |
| | S3: | 50% PET/Co-PES dtex 4,8/55mm 50% P ET dtex 6,7/90mm | 15 | | | | | |
| 3 (Flore von S1 und S3 in md orientiert | S1: | 30% PET/PP dtex 3,3/51 mm 70% PET dtex 6,7/50mm | 25 | | | | | |
| | S2: | in md monoaxial gerecktes PP Netz | 30 | 16 | 0 | 16 | 65 | 77,4 |
| | S3: | 30% PET/PP dtex 3,3/51mm 70% PET dtex 1,7/38mm | 10 | | | | | |

(fortgesetzt)

| Beispiel Nr. | Kompositzusammensetzung S1, S2, S3 | | Gew. %[*] g/m$^2$ | Schrumpf % in | | | Flächengewicht vor Schr | Flächengewicht nach Schr |
|---|---|---|---|---|---|---|---|---|
| | | | | md | cd | Fläche | | |
| 4 (Flore von S1 und S3 in cd orientiert | S1: | 30% PET/PP dtex 3,3/51mm 70% PET dtex 6,7/50mm | 25 | | | | | |
| | S2: | in md monoaxial gerecktes PP Netz | 30 | 25 | 0 | 25 | 65 | 86,7 |
| | S3: | 30% PET/PP dtex 3,3/51mm 70% PET dtex 1,7/38mm | 10 | | | | | |
| 5 | S1: | 30% PET/PP dtex 3,0/50mm 70% PP dtex 2,8/60mm | 20 | | | | | |
| | S2: | uniaxial in md Richtung gereckte PE Folie Dicke 15 $\mu$m | 14 | 22 | 0 | 22 | 34 | 44 |
| | S3: | - | | | | | | |
| [*] vor dem Schrumpf | | | | | | | | |

Tabelle 2: Meßergebnisse

| Produktvariante aus | Gewicht (g/m$^2$) | Dicke bei 780 Pa (mm) | Wiedererholvermögen (%) | Kompressionswiderstand (%) | Kriechbeständigkeit (%) |
|---|---|---|---|---|---|
| Beispiel 1 | 68,5 | 3,60 | 93 | 73 | 57 |
| Beispiel 2 | 81,0 | 2,70 | 91 | 72 | 55 |
| Vergleichsbeispiel zu 1 und 2 | 70,2 | 2,95 | 76 | 60 | 44 |

**Patentansprüche**

1. Dreidimensional strukturiertes Faserflächengebilde mit regelmäßig in Bezug auf die Flächenebene alternierend auftretenden Erhebungen und Vertiefungen, abgleitet von mindestens einem als Außenlagen angeordneten Stapelfaserflor und einem damit verbundenen geschrumpften Flächengebilde, wobei die Verbindung zwischen dem Stapelfaserflor und dem geschrumpften Flächengebilde durch Verschweißen erfolgt ist und wobei das Verschweißen senkrecht zur Richtung des stärksten Schrumpfes des geschrumpften Flächengebildes in der Form von regelmäßig angeordneten Linien erfolgt ist.

2. Dreidimensional strukturiertes Faserflächengebilde nach Anspruch 1, **dadurch gekennzeichnet, dass** dieses zwei als Außenlagen angeordnete Stapelfaserflore aufweist.

3. Dreidimensional strukturiertes Faserflächengebilde nach Anspruch 1, **dadurch gekennzeichnet, dass** das Bindungsmuster zur Fixierung des Stapelfaserflors auf dem geschrumpften Flächengebilde in der Form von regelmäßig angeordneten und nicht unterbrochenen Linien erfolgt ist.

4. Dreidimensional strukturiertes Faserflächengebilde nach Anspruch 1, **dadurch gekennzeichnet, dass** das Verschweißen durch Hitze und Kalanderdruck und/oder durch Ultraschall erfolgt ist.

5. Dreidimensional strukturiertes Faserflächengebilde nach Anspruch 1, **dadurch gekennzeichnet, dass** das geschrumpfte Flächengebilde ausgewählt wird aus der Gruppe bestehend aus Gewebe, Gewirke, Netz, Gelege, parallel verlaufenden Monfilamenten, Stapelfaser- oder Multifilamentgarnen, einem Vliesstoff oder einer Folie.

6. Dreidimensional strukturiertes Faserflächengebilde nach Anspruch 5, **dadurch gekennzeichnet, dass** das geschrumpfte Flächengebilde ausgewählt wird aus der Gruppe bestehend aus einem Vliesstoff oder einer Folie.

7. Dreidimensional strukturiertes Faserflächengebilde nach Anspruch 6, **dadurch gekennzeichnet, dass** das geschrumpfte Flächengebilde sich von einer uniaxial- oder biaxial gereckten Folie ableitet.

8. Dreidimensional strukturiertes Faserflächengebilde nach Anspruch 1, **dadurch gekennzeichnet, dass** dieses ein geschrumpftes Flächengebilde und zwei nicht oder unter Prozeßbedingungen weniger geschrumpfte Stapelfaserflore aufweist.

9. Dreidimensional strukturiertes Faserflächengebilde nach Anspruch 1, **dadurch gekennzeichnet, dass** die Stapelfaserflore Flächengewichte von 6 bis 70 g/m$^2$ aufweisen.

10. Dreidimensional strukturiertes Faserflächengebilde nach Anspruch 1, **dadurch gekennzeichnet, dass** das Muster der Verschweißung von Stapelfaserfloren und schrumpffähigem Flächengebilde in der Form von regelmäßig senkrecht zur und/oder in Maschinenlaufrichtung angeordneten und vorzugsweise ununterbrochenen Linien oder Balken verläuft.

11. Dreidimensional strukturiertes Faserflächengebilde nach Anspruch 1, **dadurch gekennzeichnet, dass** das Muster der Verschweißung von Stapelfaserfloren und schrumpffähigem Flächengebilde in der Form von regelmäßig auf der Oberfläche des Vliesstoffes angeordneten Linien in der Form von Hexagons verläuft.

12. Verfahren zur Herstellung eines dreidimensional strukturierten Faserflächengebildes nach Anspruch 1 umfassend die Maßnahmen:

    a) Kombination von mindestens einem Stapelfaserflor als Außenlag mit einem schrumpffähigen Flächengebilde,
    b) Verschweißen zwischen dem Stapelfaserflor und dem schrumpffähigen Flächengebilde in Form eines Linienmusters, vorzugsweise durch Hitze und Kalanderdruck und/oder durch Ultraschall, das senkrecht zur Richtung des stärksten Schrumpfes des schrumpffähigen Flächengebildes verläuft,
    c) Erhitzen des erhaltenen Verbundes auf eine solche Temperatur, dass der Schrumpf des schrumpffähigen Flächengebildes ausgelöst wird und sich regelmäßig in Bezug auf die Flächenebene alternierend auftretende Erhebungen und Vertiefungen ausbilden.

13. Verwendung des dreidimensional strukturierten Faserflächengebildes nach Anspruch 1 als Filter für die Flüssig-, Staub- und/oder Partikelfiltration, als hochvolumige Aufnahme- und Verteilerschicht in Hygieneartikeln, insbesondere in Windeln oder der Damenhygiene, sowie als Verhakungsteil für Klettverschlüsse.

**Claims**

1. Three-dimensionally structured fibrous sheetlike construction having elevations and depressions with regard to the sheet plane which occur regularly and alternatingly, derived from at least one staple fibre web disposed as outside ply and from a shrunk sheetlike construction bonded thereto, the bonding between the staple fibre web and the shrunk sheetlike construction having been effected by welding and the welding having been effected perpendicularly to the direction of the greatest shrinkage of the shrunk sheetlike construction in the form of regularly arranged lines.

2. Three-dimensionally structured fibrous sheetlike construction according to Claim 1, **characterized in that** it comprises two staple fibre webs disposed as outside ply.

3. Three-dimensionally structured fibrous sheetlike construction according to Claim 1, **characterized in that** the bonding pattern for fixing the staple fibre web on the shrunk sheetlike construction has been effected in the form of regularly arranged and uninterrupted lines.

4. Three-dimensionally structured fibrous sheetlike construction according to Claim 1, **characterized in that** the welding has been effected by heat and calender pressure and/or by ultrasound.

5. Three-dimensionally structured fibrous sheetlike construction according to Claim 1, **characterized in that** the shrunk sheetlike construction is selected from the group consisting of wovens, formed-loop knits, net, laid scrims, parallel monofilaments, staple fibre or multifilament yarns, a nowoven fabric or a film.

6. Three-dimensionally structured fibrous sheetlike construction according to Claim 5, **characterized in that** the shrunk sheetlike construction is selected from the group consisting of a nonwoven fabric and a film.

7. Three-dimensionally structured fibrous sheetlike construction according- to Claim 6, **characterized in that** the shrunk sheetlike construction derives from a uniaxially or biaxially oriented film.

8. Three-dimensionally structured fibrous sheetlike construction according to Claim 1, **characterized in that** it comprises a shrunk sheetlike construction and two staple fibre webs shrunk less under operating conditions or unshrunk.

9. Three-dimensionally structured fibrous sheetlike construction according to Claim 1, **characterized in that** the staple fibre webs have basis weights in the range from 6 to 70 $g/m^2$.

10. Three-dimensionally structured fibrous sheetlike construction according to Claim 1, **characterized in that** the pattern of the welding together of staple fibre webs and shrinkable sheetlike construction extends in the form of preferably uninterrupted lines or bars arranged regularly perpendicularly to and/or in the machine direction.

11. Three-dimensionally structured fibrous sheetlike construction according to Claim 1, **characterized in that** the pattern of the welding together of staple fibre webs and shrinkable sheetlike construction extends in the form of lines arranged regularly on the surface of the nonwoven fabric in the form of hexagons.

12. Process for producing a three-dimensionally structured fibrous sheetlike construction according to Claim 1 comprising the measures of:

    a) combining at least one staple fibre web as outside ply with a shrinkable sheetlike construction,
    b) welding between the staple fibre web and the shrinkable sheetlike construction in the form of a line pattern, preferably by heat and calender pressure and/or ultrasound, which extends perpendicularly to the direction of the greatest shrinkage of the shrinkable sheetlike construction,
    c) heating the resulting assembly sufficiently to induce shrinkage of the shrinkable sheetlike construction and form elevations and depressions with regard to the sheet plane which occur regularly and alternatingly.

13. Use of the three-dimensionally structured fibrous sheetlike construction according to Claim 1 as a filter for liquid, dust and/or particle filtration, as a high-volume acquisition and distributor layer in hygiene articles, particularly in diapers or feminine hygiene, and also as a hook component for hook-and-loop fasteners.

**Revendications**

1. Structure surfacique fibreuse structurée en trois dimensions, comprenant des surélévations et des renfoncements apparaissant en alternance régulièrement par rapport au plan surfacique, dérivée d'au moins une nappe de fibres discontinues disposée de manière à faire office de couche extérieure et d'une structure surfacique rétractée reliée à celle-ci, la liaison entre la nappe de fibres discontinues et la structure surfacique rétractée étant établie par soudage et le soudage étant effectué perpendiculairement au sens de plus forte rétraction de la structure surfacique rétractée sous forme de lignes disposées régulièrement.

2. Structure surfacique fibreuse structurée en trois dimensions selon la revendication 1, **caractérisée en ce qu'**elle présente deux nappes de fibres discontinues disposées de manière à faire office de couche extérieure.

3. Structure surfacique fibreuse structurée en trois dimensions selon la revendication 1, **caractérisée en ce que** le modèle de jonction pour la fixation de la nappe de fibres discontinues sur la structure surfacique rétractée est réalisé sous forme de lignes disposées régulièrement et non interrompues.

4. Structure surfacique fibreuse structurée en trois dimensions selon la revendication 1, **caractérisée en ce que** le soudage est réalisé à la chaleur et sous pression de calandre et/ou aux ultrasons.

5. Structure surfacique fibreuse structurée en trois dimensions selon la revendication 1, **caractérisée en ce que** la structure surfacique rétractée est sélectionnée parmi le groupe composé d'une toile, d'une maille, d'un filet, d'un non-tissé, de monofilaments s'étendant parallèlement, de fils à fibres discontinues ou à multifilaments, d'une matière non tissée ou d'un film.

6. Structure surfacique fibreuse structurée en trois dimensions selon la revendication 5, **caractérisée en ce que** la structure surfacique rétractée est sélectionnée parmi le groupe composé d'une matière non tissée ou d'un film.

7. Structure surfacique fibreuse structurée en trois dimensions selon la revendication 6, **caractérisée en ce que** la structure surfacique rétractée dérive d'un film étiré uniaxialement ou biaxialement.

8. Structure surfacique fibreuse structurée en trois dimensions selon la revendication 1, **caractérisée en ce qu'**elle comporte une structure surfacique rétractée et deux nappes de fibres discontinues non rétractées ou moins rétractées dans des conditions de traitement.

9. Structure surfacique fibreuse structurée en trois dimensions selon la revendication 1, **caractérisée en ce que** les nappes de fibres discontinues ont des grammages de 6 à 70 g/m$^2$.

10. Structure surfacique fibreuse structurée en trois dimensions selon la revendication 1, **caractérisée en ce que** le modèle de soudage des nappes de fibres discontinues et de la structure surfacique rétractable s'étend sous forme de lignes ou de barres disposées régulièrement à la perpendiculaire du et/ou dans le sens de marche de la machine et de préférence ininterrompues.

11. Structure surfacique fibreuse structurée en trois dimensions selon la revendication 1, **caractérisée en ce que** le modèle de soudage des nappes de fibres discontinues et de la structure surfacique rétractable s'étend sous forme de lignes disposées régulièrement sur la surface de la matière non tissée et ayant la forme d'hexagones.

12. Procédé de fabrication d'une structure surfacique fibreuse structurée en trois dimensions selon la revendication 1, comprenant les mesures suivantes :

   a) combinaison d'au moins une nappe de fibres discontinues servant de couche extérieure à une structure surfacique rétractable,
   b) soudage, de préférence à la chaleur et sous pression de calandre et/ou aux ultrasons, de la nappe de fibres discontinues et de la structure surfacique rétractable, sous forme d'un modèle de ligne s'étendant perpendiculairement au sens de plus forte rétraction de la structure surfacique rétractable,
   c) chauffage du composite obtenu à une température telle que la rétraction de la structure surfacique rétractable se déclenche et que des surélévations et renfoncements apparaissant en alternance régulièrement par rapport au plan surfacique se forment.

13. Utilisation de la structure surfacique fibreuse structurée en trois dimensions selon la revendication 1 en tant que filtre pour la filtration de liquide, de poudre et/ou de particules, sous forme d'une couche réceptrice et distributrice très volumineuse dans des articles d'hygiène, notamment dans des couches ou en hygiène féminine, ainsi que comme pièce d'accrochage pour bande agrippante.

# Fig.1

# Fig.2a

# Fig.2b

Fig.2c

## Fig.3

# Fig.4a

# Fig.4b

Fig.5a

Fig.5b

# Fig.6a

Fig.6b

39

36

37

38

Fig.7a

# Fig.7b

Fig.8a

50

51

Fig.8b

Fig.9